# EUROPEAN PATENT SPECIFICATION

(11) **EP 1 495 409 B1**
(45) Date of publication and mention of the grant of the patent: **23.10.2013**
(21) Application number: 03720701.6
(22) Date of filing: 11.04.2003
(51) Int. Cl.: H04L 29/06, G06F 12/14, H04L 9/08, H04W 12/04, H04L 9/32

(54) **METHOD AND SYSTEM FOR DISTRIBUTION OF ENCRYPTED DATA IN A MOBILE NETWORK**
VERFAHREN UND SYSTEM ZUR VERTEILUNG VERSCHLÜSSELTER DATEN IN EINEM MOBILNETZWERK
PROCEDE ET SYSTEME DE DIFFUSION DE DONNEES CHIFFREES DANS UN RESEAU MOBILE

(30) Priority: 12.04.2002 GB 0208453
(43) Date of publication of application: 12.01.2005
(73) Proprietor: Vodafone Group PLC, Newbury Berkshire RG14 2FN (GB)
(72) Inventor: BONE, Nicholas, Newbury, Berkshire RG14 2PN (GB); WRIGHT, Timothy, James, Reading RG1 4EB (GB)
(74) Representative: Boult Wade Tennant
(86) International application number: PCT/GB2003/001594
(87) International publication number: WO 2003/088054

(56) References cited:
- WO-A-00/59244
- WO-A-97/22221
- GB-A- 2 327 567

## Description

The present invention relates to communication apparatus such as mobile telephones and the controlled distribution of data thereto, to communication systems including such apparatus, and to a storage module such as a smart card for use with such communication apparatus.

Digital Rights Management (DRM) is a technology allowing encrypted digital files to be readily distributed to potential users without charge. The encrypted data may be freely onwardly transmitted by the user receiving the data. However, for any user to be able to make use of the data, it must be decrypted. To obtain a key to decrypt the data, a licence must be purchased or otherwise obtained from a licence broker.

GB 2327567 discloses a method of controlling mobile terminal access to a broadcast. The broadcast is encrypted and only those mobile terminals permitted to access the broadcast are provided with the decryption key.

WO 97/22221 discloses a method of locking and unlocking a mobile handset, which creates a checkword using identity information from the handset and a SIM associated with the handset, which is verifiable by the network.

WO 00/59244 discloses a method of transferring encrypted data to a mobile terminal, wherein the encryption key for the data is stored on a module connectable to the mobile terminal, such as a SIM.

According to the present invention, there is provided communication apparatus as defined in claim 1.

According to a further aspect of the invention, there is provided a communication system as defined in claim 10.

Communication apparatus and a communication system according to the present invention will now be described, by way of example, with reference to the accompanying drawings, in which:-
Figure 1 shows schematically a telecommunications network according to a first embodiment of the invention including facilities for handling short messages and for communication with the Internet;
Figure 2 shows an alternative arrangement to the first embodiment;
Figure 3 shows schematically a device for receiving audio and/or video data from a communications network including a smart card or subscriber identity module (SIM); and
Figure 4 shows schematically a modification of the Figure 3 arrangement where a mobile terminal is used to obtain a decryption key.

In the drawings like elements are generally designated with the same reference numerals.

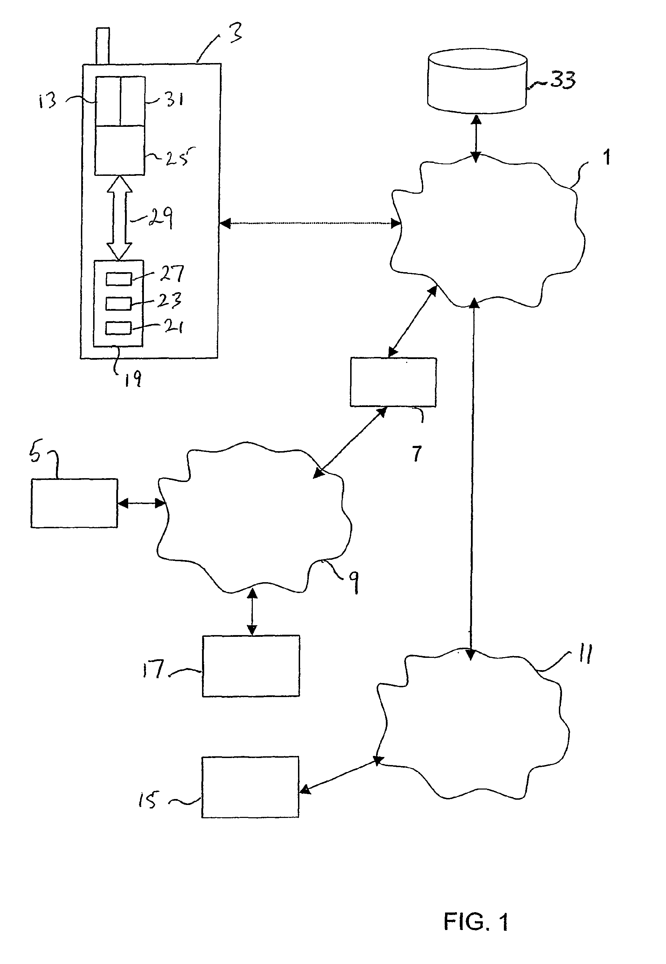

Figure 1 shows a network 1 of a cellular telecommunications system that has a terminal 3 associated with it. The terminal 3 may be a mobile telephone, a computer with cellular telecommunication facilities or other device with cellular telecommunication facilities. There will be many further terminals associated with the network 1, but such further terminals are not shown, for the sake of simplicity. In this embodiment the network 1 is a GSM network. When the terminal 3 wishes to communicate with another terminal or a fixed telephone, it will signal accordingly to a base station of the network I where it is situated. The details of the terminal 3 are obtained from a home location register (HLR) of the network and temporarily placed in a visitor location register (VLR) appropriate to the cell and used to enable the terminal 3 to complete the connection with the call destination.

The procedure for transmission of "short messages" is different. The term "short messages" (SMS) as used in relation to this embodiment means short messages as defined in the GSM Standard Specification. Such messages are commonly in the form of text messages of limited maximum length, but they can have other forms such as in the form of binary data. However, as an alternative to such short messages, the messaging format may be that of multi-media messaging (MMS).

Short messages may be sent to and from terminal 3 and other terminals belonging to the network 1. However, in addition, such messages may be sent to or from "short message entities" (SMEs) such as shown at 5. The SMEs 5 may be in the form of terminals of various sorts, such as fixed terminals for sending short messages of various types to mobile terminals and for receiving short messages from mobile terminals. For example, the SME terminal 5 may be in the form of a terminal associated with banking computers or computers of other types generating information (commercial information, for example) for transmission to mobile terminals and for receiving short messages in response from mobile terminals, but may be of any other type, such as application servers of various types.

The network 1 has a short message service centre (SMSC) 7 associated with it. For example, if the mobile terminal 3 wishes to send a short message to another mobile terminal associated with the network 1, the short message is automatically addressed by the mobile terminal 3 to SMSC 7. SMSC 7 then delivers the short message to the addressed mobile terminal. When the local SMSC 7 receives the short message, it reads the address (the MSISDN or mobile terminal ISDN number or telephone number of the intended destination) and despatches the short message accordingly. The SME terminal 5 is connected to the SMSC 7 by a fixed network 9 of suitable type. When the terminal 3 sends or receives a short message, it will do this via the SMSC 7 of its network 1.

The telecommunications network 1 is also coupled to the Internet 11 for data communication therewith.

Mobile terminal 3 may, for example, include a wireless application protocol (WAP) browser 13 or other suitable means for allowing the running of applications from the Internet 11.

A "content provider" 15 makes available to the user of terminal 3 via the Internet 11 and network 1 information that can be downloaded to the mobile terminal 3. The content provider 15 could, for example, provide ringing tone formats, games and activity applications, screen savers or imaging for multi-media messaging (MMS).

When the user of mobile terminal 3 identifies content that he wishes to obtain from the content provider 15, the mobile terminal 3 is used to send a request via the network 1 and the Internet 11 for the content from the content provider 15. The requested content is transmitted to the mobile terminal 3 via the Internet 11 and the network 1 in encrypted form such that the content is of no use to the mobile terminal 3 in the form that it is received. At this stage no charge has been made to the mobile terminal 3 for the content provided by content provider 15. If desired, the mobile terminal 3 may be used to onwardly transmit the encrypted content to other users in the network 1 and beyond. However, these other users will not be able to make use of the content as it is in encrypted form at this stage.

When the user of mobile terminal 3, or the user of any other terminal to which the content has been transmitted, wishes to make use of this content, they will be prompted by their terminal to purchase " rights " to make use of the content. If the user of the mobile terminal accepts the purchase, this is communicated in the form of an SMS or WAP call to a digital rights management (DRM) broker 17, via SMSC 7 and fixed network 9. The DRM broker 17 is a short message entity, similar to SME 5, and has an agreement with content provided 15 to provide licences for use of the content. The payment for the content could be made, for example, by deducting an appropriate amount from the account of the user of mobile terminal 3 with the network 1. When the payment has been made, licence information including a licence and content decryption key in the form of an SMS is sent to the mobile terminal 3 by DRM broker 17 via fixed network 9 and SMSC 7. The licence might, for example, grant the user of the mobile terminal 3 unlimited use of the content, or may restrict use of the content to be for a particular time period, depending on the price paid for the content by the user.

It is preferred to send the licence and content decryption key in the form of an SMS because an SMS must pass through the network operator's SMSC 7. The SMS may itself be of encrypted text for added security. Alternatively, or additionally, the SMS may be sent directly to the subscriber identity module (SIM) 19 associated with the mobile terminal 3 in a secure manner as an over the air (OTA) update.

A potential problem of such an arrangement is that the user of mobile terminal 3 may be able to obtain the content decryption key from the information sent by the DRM broker 17 and make this available to other users of mobile terminals, allowing these other users to avoid paying for use of the content.

In the embodiment being described and in order to overcome this problem, the SIM 19 is provided with a private key of a public-private key pair during its manufacture. The private key is stored in register 21 on the SIM 19. Other information stored on the SIM 19 includes a subscriber identity field (IMSI) stored in register 23 comprising data providing a unique identity of the SIM within the telecommunication system.

The private key is stored on the SIM 19 rather than the mobile terminal 3 so that the mobile terminal manufacturer does not need to create its own public-private key infrastructure (i.e. the cost of creating and certifying key-pairs). Also, the SIM 19 is a more secure storage medium for the private key than the mobile terminal.

It is important that the information stored on the SIM 19 cannot be copied. Secret information on the SIM 19 (for example, the IMSI and/or the private key or a function of one or both of them) is bound in a data binding process with other secret information, the binding of these two types of secret information being certified and digitally signed in a widely recognised way by a Certificate Authority. This "binding" operation will normally be carried out at the time when the SIM 19 is manufactured, and could be performed in the manner described in EP-A-1 176 844.

When it is desired to communicate with the mobile terminal 3 the digitally signed Certificate can be used to confirm the authenticity of the SIM 19 (i.e., confirm that the SIM 19 is a genuine SIM).

The information may be obtained from the Certificate Authority by referring to the telephone number of the mobile terminal 3, for example. Also associated with the telephone number at the Certificate Authority, or alternatively on another database, is the public key associated with the private key stored on the register 21 of the SIM 19.

The DRM broker 17 will optionally check the identity of the SIM 19 by referring to its Certificate. At this time, if the SIM 19 has become compromised in some way known to the operator of network 1, this can be notified to the DRM broker 17 so that it will not proceed with the transaction with the SIM 19.

According to the embodiment, the licence information provided by the DRM broker 17 is encrypted using the public key that the DRM broker 17 obtains from the relevant database, the obtained public key being the public key for the mobile terminal 3 requesting the content and not for any other mobile terminal 3. The encrypted licence information can be decrypted only by using the private key associated with the public key. Therefore, only the mobile terminal 3 is able to decrypt the content. Even if the user of mobile terminal 3 was able to transmit the encrypted licence information to other mobile terminals, this information would be of no use to those terminals as they would have a different private key and consequently would not be able to decrypt the licence information encrypted with the public key of mobile terminal 3.

When the DRM broker 17 obtains the public key from the relevant database, it may also obtain information identifying the type of mobile terminal or the particular mobile terminal (for example, the terminal's international mobile equipment identity number (IMEI)) associated with the public key. This information is useful because some mobile terminals may be poorly designed so that even encrypted data transmitted thereto would not be secure. If the mobile terminal requesting a licence from the DRM broker 17 is identified as not being secure, the DRM broker 17 could refuse to transmit the licence information.

Similarly, the database could include a field that indicated whether the mobile terminal is one that is known to have had its operating system compromised in some way. If the DRM 17 is made aware that the mobile terminal has been compromised it could refuse to transmit licence information.

If the mobile terminal 3 is deemed acceptably secure, encrypted licence information is transmitted to the mobile terminal 3. The encrypted licence information passes to the core operating system 25 of the mobile terminal 3. The core operating system 25 communicates with the SIM 19 and is operable to forward the received encrypted licence information to the SIM 19. The licence information including the content decryption key is decrypted using the private key stored on register 21 in the SIM 19. The SIM 19 sends the decrypted licence information to the core operating system 25 so that the core operating system 25 can decrypt the encrypted content using the content decryption key. The content decryption key cannot be accessed by parts of the mobile terminal 3 other than the core operating system 25, so less controlled applications running in "untrusted" parts of the mobile terminal (for example, hacker programs or viruses) will not be able to decrypt the content. These other parts of the mobile terminal 3 cannot access the SIM 19 independently of the core operating system 25 and cannot access communications between the core operating system 25 and the SIM 19.

The core operating system 25 is designed to follow any usage restrictions of the licence.

To discourage rogue DRM brokers illegitimately offering licences for content that is not theirs to licence, the network 1 could make a charge for the distribution of the SMS or MMS used to transmit the licence, which would deter the distribution of free illegitimate licences. Additionally, or alternatively, legitimate brokers could electronically sign licences, and the mobile terminal 3 could be configured to only accept licences signed by an approved DRM broker.

A problem that could arise with the arrangement as so far described is that a user could remove the SIM 19 from mobile terminal 3 after the licence information has been decrypted and place the SIM 19 in another mobile terminal to which it previously forwarded the encrypted content. It would then be possible to decrypt the content on this other handset without paying an appropriate licence fee. It may also be that this new handset is of a weaker design than the first, so allowing the content to be extracted in decrypted form, and shared with others without payment.

According to the first embodiment, the SIM 19 is provided with a secret key stored on register 27, which is used by the SIM 19 to encrypt communications to the core operating system 25 and decrypt communications from the core operating system 25. The communication between the SIM 19 and the mobile terminal 25 is indicated schematically by arrow 29. The terminal 3 is provided with a corresponding secret key stored in register 31 to allow encryption and decryption of data communicated to and from the SIM 19. The secret key stored in respective registers 27 and 31 is a "shared" or symmetric secret key. Only one mobile terminal 3 and one SIM 19 is provided with a particular secret key. This means that the mobile terminal 3 and the SIM 19 are effectively "locked" to one another. If the SIM 19 were removed from mobile terminal 3 and used in another mobile terminal, no meaningful communication between the mobile terminal and the SIM 19 would be able to take place as the secret key stored in the secret key register of the mobile terminal could not correspond to the secret key stored in the register 27 of the SIM 19. The data encrypted by the SIM 19 using the secret key of register 27 could not be decrypted by the mobile terminal, and the SIM 19 could not decrypt information encrypted by the different secret key of the mobile terminal.

During manufacture of the mobile terminal 3, a secret key is stored on register 31. This secret key is stored on the mobile terminal manufacturer's database 33 of secret keys. The information on this database is provided in a secure manner to the network 1.

When the SIM 19 is operatively connected to the mobile handset 3 for the first time when the SIM 19 and mobile terminal 3 are used in the network 1, the network interrogates the manufacturer's database 33 and obtains the secret key for the mobile terminal 3, which may be identified, for example, by the international mobile equipment identity number (IMEI) associated with the mobile terminal 3. This secret key is then passed to the SIM 19 installed on the secret key register 27 to allow secure communication between the mobile terminal 3 and SIM 19.

Communication of the secret keys is performed in a secure manner, for example by means of an OTA update to get the secret key to the SIM 19.

Preferably the network operator or the mobile terminal manufacturer (or preferably both) maintains a list of blacklisted IMEIs: handsets whose core operating systems 25 are known to have been hacked, or whose secret key values have been leaked. If the SIM 19 is placed in one of these mobile terminals no value will be sent to the SIM 19, and the mobile terminal 3 and SIM 19 will not be useable for receiving DRM-protected content.

Preferably, the SIM 19 includes authentication information allowing it to be registered with more than one network, as described in WO-A-03/013174. This will allow the "home" network of the SIM to be changed. This is particularly advantageous when the SIM is locked to the terminal because a user cannot change the home network of the terminal by obtaining a new SIM from a desired network provider - because the new SIM will not work with the terminal.

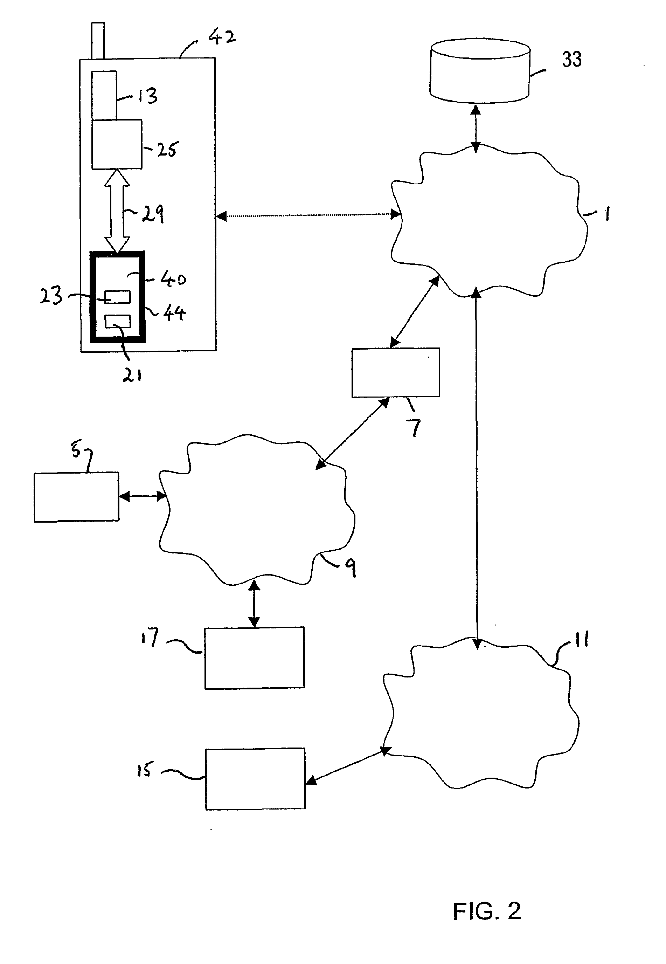

Figure 2 shows an alternative arrangement, not forming part of the claimed invention, where the SIM 40, is secured to the mobile terminal 42, so that it cannot be removed. The SIM 40 may be secured by any suitable means, such as by a weld 44. The SIM 40 is secured permanently. Removal of the SIM 40 will damage the SIM 40 and/or the mobile terminal 42. In this embodiment the shared secret key is not required and unencrypted communication can take place between the SIM 40 and the mobile terminal 42, as the SIM 40 cannot be removed. Therefore, the registers 27 and 31 storing the shared secret keys in the first embodiment are not required. The SIM identifier (IMSI) may be used directly as a handset identifier (IMEI) or, if an unrelated IMEI is to be used, this can be incorporated into the SIM's certificate. In this embodiment it is also useful to include in the SIM authentication information allowing it to be registered with more than one network, as described in WO-A-03/013174, referred to above. Batches of SIMs can be provided for pre-fit into mobile terminals sold internationally. On choice of a destination country, the SIM is tuned OTA so that it can be used by a local network operator, and connected to a particular account.

The above description is of a GSM telecommunications system. However, the invention is not limited in this way and may be used with other systems such as UMTS, 3G and GPRS but also including other communication systems.

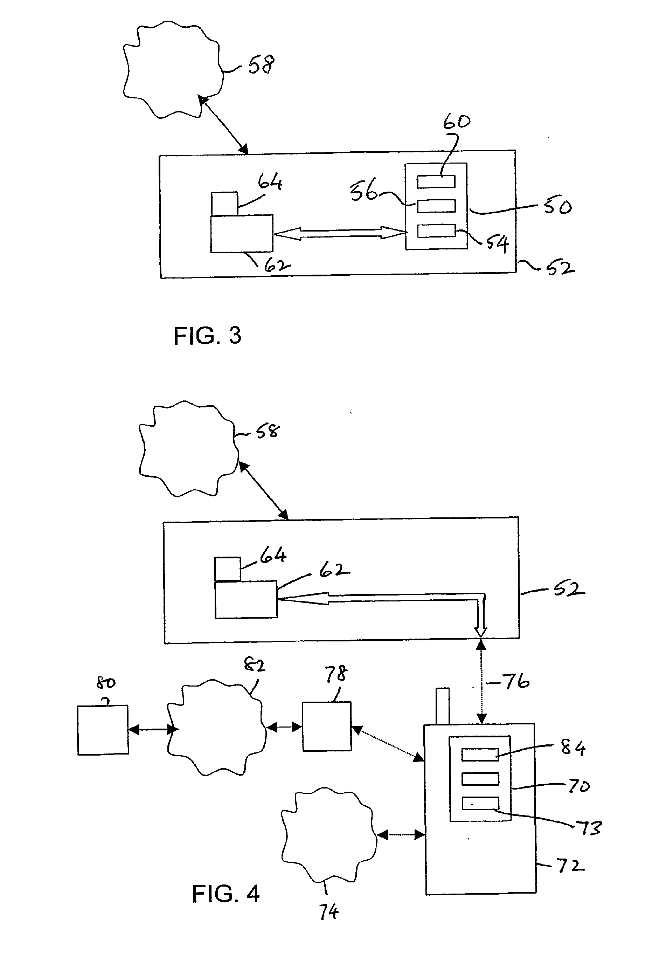

Figure 3 shows a further application for the use of encrypted communication between a SIM 50 and a communication device 52. In this embodiment, the communication device 52 is a device for receiving audio and/or visual information from a cable or satellite link - for example, a so-called "set top box" used with a television.

The SIM 50 is similar to the SIM of the first embodiment in that it is provided with a private key of a public-private key pair during its manufacture. The private key is stored on register 54 on the SIM 50. Other information stored on the SIM 50 includes a subscriber identity field stored on register 56 comprising data providing a unique identity of the SIM 50 to the provider of audio/visual services from network 58. The services may be provided by a cable link to the communication device 52 or by a satellite link.

The public key corresponding to the private key 54 stored on the SIM 50 is available from a database accessible by audio/visual network 58.

Audio/visual data from the network 58 is encrypted using a key. Each television program may, for example, have a different key. When a user wishes to view a particular television program they will communicate this desire to the network 58 which may make an appropriate deduction from the user's account with the network 58. A decryption key encoded using the public key obtained by the network which corresponds to the private key 54 of the SIM 50 is then sent by network 58 to the receiver device 52. Therefore, only the SIM 50 is able to decode the decryption key to allow viewing of the selected television program.

If a third party were able to remove, borrow or even copy the SIM 50 they may be able to obtain audio/visual data in the network 58 without payment of appropriate subscription charges. According to this embodiment, the SIM 50 is provided with a secret key 60 which is used by the SIM 50 to encrypt communications to the core processor 62 of the receiving device 52. The receiver device 52 is provided with a corresponding secret key 64 to allow decryption of data communicated from the SIM 50. Data transmitted from the processor 62 is also encrypted using the secret key 64, the secret key 60 of the SIM 50 being used to decrypt the data at the SIM when this is received. The secret key 60 of the SIM 50 and the secret key 64 of the receiver device 52 are a "shared" secret key. Only one receiver device 52 and one SIM 50 is provided with a particular secret key. This means that the receiver device 52 and the SIM 50 are effectively "locked" to one another. If the SIM 50 were removed or copied and an attempt was made to use this with another receiver device 52, no meaningful communication between the other receiver device and the SIM would be able to take place as the secret key 60 stored on the SIM would not correspond to the secret key of the other receiver device. In addition, if a SIM is known to have been copied then it can be blacklisted (for example, by having its certificate assessable by the network 58 revoked), thereby preventing its receipt of any more program decryption keys.

As an alternative to providing the shared secret keys 60, 64, not forming part of the claimed invention, the SIM 50 could be secured to the receiving device 52. A facility could be provided to allow the SIM 50 to be tuned to the network operating in the country where the receiving device 52 is sold.

Figure 4 shows a variation of the Figure 3 embodiment in which the decryption of keys for viewing selected television programs from network 58 is provided by a SIM 70 within a mobile terminal 72. Other components of the receiver device 52 are the same as in the Figure 3 embodiment. The SIM 70 contains a private key 73 in a similar manner to the Figure 1 and Figure 3 embodiments. Register 74 of the SIM 70 includes a subscriber identity field (IMSI) similar to the Figure 1 embodiment which identifies the mobile terminal 72 to mobile network 74. The mobile terminal 72 is linked to the receiver device 52 by a wireless radio, an infra-red or a cable link 76. Encrypted audio/visual data from the network 58 is transmitted to the receiver device 52 in a similar manner to the Figure 3 embodiment. A decryption key for decrypting this audio/visual data is provided by an exchange of short messages between the mobile terminal 72 and SMSC 78. The SMSC 78 communicates in turn with a licence broker 80 via fixed network 82. The licence broker 80 provides the decryption key encoded using the public key corresponding to the private key 73 of the SIM 70. The licence broker 80 obtains the public key corresponding to the SIM 70 from a database in the manner described previously. The decryption key is decoded using the private key 73. The decoded key is then passed securely to the core processor 62 of the receiver device 62 to allow the decryption of the audio/visual data from network 58.

According to this embodiment, the SIM 70 is provided with a secret key 84 which is used by the SIM 70 to encrypt communications to the core processor 62 of the receiving device 52. The main processor 62 is provided with a corresponding secret key 64 to allow decryption of data communicated from the SIM 70. Data transmitted from the processor 62 is also encrypted using the secret key 64, the secret key 84 of the SIM 70 being used to decrypt the data at the SIM when this is received. The secret key 84 of the SIM 70 and the secret key 64 of the processor 62 are a "shared" secret key. Only one processor 62 and one SIM 70 is provided with a particular secret key. This means that the processor 62 and the SIM 70 are effectively "locked" to one another.

The secret keys 64,84 can be provided to the SIM 70 and the core processor 62 in a similar manner to that described in relation to the Figure 1 embodiment.

It is possible to have more than one secret key stored on the SIM. This will allow a SIM/mobile owner to legally operate with several devices (for example, several set-top boxes at different locations or different devices such as a set-top box and DVD player).

## Claims

1. Communication apparatus including receiver means (3,52) for receiving data over a communication network (1,58), and a storage module (19,50,70) including decoding means (21,54,84) for enabling the decryption of encoded data received by the receiver means (3,52) from the communication network (1,58), **characterised in that** the receiver means (3, 52) and the storage module (19, 50,70) are inter-operable with one another but not with selected other receiver means and storage modules of other communication apparatus, each of the receiver means (3,52) and the storage module (19,50,70) having a secret key (31,27) associated therewith for allowing the encryption of communications transmitted from either one thereof for reception by the other and for allowing decryption of the encrypted communications when so received.

2. Communication apparatus according to claim 1, wherein the secret key (31,27,64,60,84) associated with the receiver means (3,52) and the storage module (19,50,70) is a shared secret key.

3. Communication apparatus according to claim 1 or 2, wherein the communication network (1) comprises a mobile telephone network and the storage module (19, 50,70) comprises a smart card such as a SIM.

4. Communication apparatus according to claim 3, wherein the receiver means (3) comprises a mobile telephone.

5. Communication apparatus according to claim 1 or 2, wherein the communication network (58) comprises an audio and/or video data distribution network and the storage module (50,70) comprises a smart card such as a SIM.

6. Communication apparatus according to claim 5, wherein the receiver means (52) comprises a audio and/or video data receiver.

7. Communication apparatus according to any one of the preceding claims, including means (17,80) for obtaining a network data decryption key to allow decryption of the encoded data from the network (1).

8. Communication apparatus according to claim 7, wherein the network data decryption key is provided in encoded form and the decoding means (21,54,84) decodes the encoded network data decryption key.

9. Communication apparatus according to claim 8, wherein the storage module (19,50,70) stores a private key of a public-private key pair for use by the decoding means (21,54,84), the encoded network data decryption key received by the receiving means (3,52) being encoded using the public key of the public-private key pair.

10. A communication system including:
communication apparatus as claimed in any one of the preceding claims;
content provider means (15) for providing encoded data for transmission to the communication apparatus; and
decryption key provider means (17,80) for selectively providing decryption keys for allowing the communication apparatus to decode the encoded data from the content provider means (15).

11. A communication system according to claim 10, wherein the decryption key provider means (17,80) includes means for determining identification data for the communication apparatus requesting a decryption key therefrom and for selectively providing a decryption key in dependence upon the identification data.

12. A communication system according to claim 11, wherein the identification data indicates the security characteristics of the communication apparatus.

13. A communication system according to claim 11 or 12, wherein the identification data indicates whether the receiver means (3,52) is authorized to receive the decryption key and/or the storage module (19, 50,70) is authorized to receive the decryption key.

14. A communication system according to claim 10, 11, 12 or 13, wherein the decryption key provider means (17,80) selectively provides decryption keys by means of short messages.

## Patentansprüche

1. Kommunikationsvorrichtung mit einem Empfängermittel (3, 52) zum Empfangen von Daten über ein Kommunikationsnetz (1, 58) und einem Speichermodul (19, 50, 70) mit einem Decodiermittel (21, 54, 84) zum Ermöglichen des Entschlüsselns von durch das Empfängermittel (3, 52) aus dem Kommunikationsnetz (1, 58) empfangenen codierten Daten, **dadurch gekennzeichnet, dass** das Empfängermittel (3, 52) und das Speichermodul (19, 50, 70) miteinander, aber nicht mit ausgewählten anderen Empfängermitteln und Speichermodulen anderer Kommunikationsvorrichtungen dialogfähig sind, wobei sowohl das Empfängermittel (3, 52) als auch das Speichermodul (19, 50, 70) einen damit verknüpften Geheimschlüssel (31, 27) zum Ermöglichen des Entschlüsselns von Nachrichten aufweist, die von einem von beiden zum jeweils anderen übertragen werden, und zum Ermöglichen des Entschlüsselns der verschlüsselten Nachrichten, wenn diese empfangen worden sind.

2. Kommunikationsvorrichtung nach Anspruch 1, bei der es sich bei dem mit dem Empfängermittel (3, 52) und dem Speichermodul (19, 50, 70) verknüpften Geheimschlüssel (31, 27, 64, 60, 84) um einen gemeinsam genutzten Geheimschlüssel handelt.

3. Kommunikationsvorrichtung nach Anspruch 1 oder 2, bei der das Kommunikationsnetz (1) ein Mobiltelefonnetz und das Speichermodul (19, 50, 70) eine Chipkarte wie eine SIM umfasst.

4. Kommunikationsvorrichtung nach Anspruch 3, bei der das Empfängermittel (3) ein Mobiltelefon umfasst.

5. Kommunikationsvorrichtung nach Anspruch 1 oder 2, bei der das Kommunikationsnetz (58) ein Audio- und/ oder Videodatennetz und das Speichermodul (50, 70) eine Chipkarte wie eine SIM umfasst.

6. Kommunikationsvorrichtung nach Anspruch 5, bei der das Empfängermittel (52) einen Audio- und/ oder Videodatenempfänger umfasst.

7. Kommunikationsvorrichtung nach einem der vorhergehenden Ansprüche mit einem Mittel (17, 80) zum Abrufen eines Netzwerkdatenentschlüsselungsschlüssels zum Ermöglichen des Entschlüsselns der codierten Daten aus dem Netzwerk (1).

8. Kommunikationsvorrichtung nach Anspruch 7, bei der der Netzwerkdatenentschlüsselungsschlüssel in codierter Form bereitgestellt wird und das Decodiermittel (21, 54, 84) den codierten Netzwerkdatenentschlüsselungsschlüssel decodiert.

9. Kommunikationsvorrichtung nach Anspruch 8, bei der das Speichermodul (19, 50, 70) einen privaten Schlüssel von einem Paar aus öffentlichem und privatem Schlüssel zur Verwendung durch das Decodiermittel (21, 54, 84) speichert, wobei der von dem Empfängermittel (3, 52) empfangene codierte Netzwerkdatenentschlüsselungsschlüssel unter Verwendung des öffentlichen Schlüssels von dem Paar aus öffentlichem und privatem Schlüssel codiert wird.

10. Kommunikationssystem mit:
der Kommunikationsvorrichtung nach einem der vorhergehenden Ansprüche,
einem Inhaltsanbietermittel (15) zum Bereitstellen codierter Daten für die Übertragung zur Kommunikationsvorrichtung und
einem Entschlüsselungsschlüsselanbietermittel (17, 80) zum gezielten Bereitstellen von Entschlüsselungsschlüsseln, damit die Kommunikationsvorrichtung die codierten Daten aus dem Inhaltsanbietermittel (15) decodieren kann.

11. Kommunikationssystem nach Anspruch 10, bei dem das Entschlüsselungsschlüsselanbietermittel (17, 80) ein Mittel zum Bestimmen von Identifikationsdaten für die Kommunikationsvorrichtung, die einen Entschlüsselungsschlüssel daraus abruft, und zum gezielten Bereitstellen eines Entschlüsselungsschlüssels in Abhängigkeit von den Identifikationsdaten aufweist.

12. Kommunikationssystem nach Anspruch 11, bei dem die Identifikationsdaten die Sicherheitsmerkmale der Kommunikationsvorrichtung angeben.

13. Kommunikationssystem nach Anspruch 11 oder 12, bei dem die Identifikationsdaten angeben, ob das Empfängermittel (3, 52) berechtigt ist, den Entschlüsselungsschlüssel zu empfangen, und/ oder das Speichermodul (19, 50, 70) berechtigt ist, den Entschlüsselungsschlüssel zu empfangen.

14. Kommunikationssystem nach Anspruch 10, 11, 12 oder 13, bei dem das Entschlüsselungsschlüsselanbietermittel (17, 80) mit Hilfe von Kurzmitteilungen gezielt Entschlüsselungsschlüssel bereitstellt.

## Revendications

1. Appareil de communication englobant des moyens à récepteur (3, 52) pour recevoir des données par le biais d'un réseau de communication (1, 58), et un module de stockage (19, 50, 70) englobant des moyens de décodage (21, 54, 84) pour assurer le décryptage de données codées reçues par les moyens à récepteur (3, 52) provenant du réseau de communication (1, 58), **caractérisé en ce que** les moyens à récepteur (3, 52) et le module de stockage (19, 50, 70) sont interopérables l'un avec l'autre, mais ne le sont pas avec d'autres moyens à récepteur et modules de stockage sélectionnés appartenant à d'autres appareils de communication, chacun des postes suivants à savoir les moyens à récepteur (3, 52) et le module de stockage (19, 50, 70) possédant une clé secrète (31, 27) associée à celui-ci afin de permettre le cryptage des communications qui sont transmises par l'un ou l'autre de ceux-ci, en vue d'une réception par l'autre, et de permettre le décryptage des communications cryptées lorsqu'elles sont reçues de cette manière.

2. Appareil de communication selon la revendication 1, la clé secrète (31, 27, 64, 60, 84) associée aux moyens à récepteur (3, 52) et au module de stockage (19, 50, 70) étant une clé secrète partagée.

3. Appareil de communication selon la revendication 1 ou 2, le réseau de communication (1) comprenant un réseau de téléphones mobiles et le module de stockage (19, 50, 70) comprenant une carte à puce intelligente, telle une SIM.

4. Appareil de communication selon la revendication 3, les moyens à récepteur (3) comprenant un téléphone mobile.

5. Appareil de communication selon la revendication 1 ou 2, le réseau de communication (58) comprenant un réseau de distribution de données audio et/ou vidéo et le module de stockage (50, 70) comprenant une carte à puce intelligente, telle une SIM.

6. Appareil de communication selon la revendication 5, les moyens à récepteur (52) comprenant un récepteur de données audio et/ou vidéo.

7. Appareil de communication selon l'une quelconque des revendications précédentes, comportant des moyens (17, 80) destinés à obtenir une clé de décryptage de données de réseau pour permettre le décryptage des données codées provenant du réseau (1).

8. Appareil de communication selon la revendication 7, la clé de décryptage de données de réseau étant fournie sous forme codée et les moyens de décodage (21, 54, 84) assurant le décodage de la clé de décryptage de données de réseau codées.

9. Appareil de communication selon la revendication 8, le module de stockage (19, 50, 70) stockant une clé privée d'une paire de clés publique-privée pour en permettre l'utilisation par les moyens de décodage (21, 54, 84), la clé de décryptage des données de réseau codées reçue par les moyens à récepteur (3, 52) étant codée grâce à l'utilisation de la clé publique de la paire de clés publique-privée.

10. Système de communication, comprenant :
un appareil de communication selon l'une quelconque des revendications précédentes ;
des moyens de fourniture de contenu (15) pour fournir des données codées en vue d'une transmission vers l'appareil de communication ; et
des moyens de fourniture de clés de décryptage (17, 80) pour fournir de façon sélective des clés de décryptage afin de permettre à l'appareil de communication de décoder les données codées qui proviennent des moyens de fourniture de contenu (15).

11. Système de communication selon la revendication 10, les moyens de fourniture de clés de décryptage (17, 80) englobant des moyens pour déterminer des données d'identification destinées à l'appareil de communication qui demande une clé de décryptage auprès de ceux-ci, et pour procurer de façon sélective une clé de décryptage en fonction des données d'identification.

12. Système de communication selon la revendication 11, les données d'identification indiquant les caractéristiques de sécurité de l'appareil de communication.

13. Système de communication selon la revendication 11 ou 12, les données d'identification indiquant si les moyens à récepteur (3, 52) sont autorisés ou non à recevoir la clé de décryptage et/ou si le module de stockage (19, 50, 70) est autorisé ou non à recevoir la clé de décryptage.

14. Système de communication selon la revendication 10, 11, 12 ou 13, les moyens de fourniture de clés de décryptage (17, 80) fournissant de façon sélective des clés de décryptage à l'aide de messages courts.
